# EUROPEAN PATENT APPLICATION

(11) **EP 4 386 252 A1**
(43) Date of publication of application: **19.06.2024**
(21) Application number: 23861680.9
(22) Date of filing: 01.11.2023
(51) Int. Cl.: F17C 3/00

(54) **CRYOGENIC STORAGE TANK**

(30) Priority: 18.10.2022 CN 202211277061
(71) Applicant: Nantong CIMC Energy Equipment Co., Ltd., Nantong, Jiangsu 226000 (CN); China International Marine Containers (Group) Co., Ltd., Shenzhen, Guangdong 518000 (CN); CIMC Enric Investment Holdings (Shenzhen) Co., Ltd., Shenzhen, Guangdong 518000 (CN)
(72) Inventor: HAI, Hang, Nantong, Jiangsu 226000 (CN); LUO, Yongxin, Nantong, Jiangsu 226000 (CN); ZHOU, Xiaoxiang, Nantong, Jiangsu 226000 (CN); ZHAO, Lin, Nantong, Jiangsu 226000 (CN); JIANG, Pingan, Nantong, Jiangsu 226000 (CN); SHEN, Weidong, Nantong, Jiangsu 226000 (CN); ZHANG, Yunkai, Nantong, Jiangsu 226000 (CN); ZHU, Xiaolin, Nantong, Jiangsu 226000 (CN)
(74) Representative: Studio Torta S.p.A.
(86) International application number: PCT/CN2023/129120
(87) International publication number: WO 2024/083263

(57) **Abstract**

The present disclosure provides a cryogenic storage tank. A cryogenic storage tank includes an inner tank, a shell and two support assemblies supported between the inner tank and the shell. The two support assemblies are provided on two opposite ends of the inner tank along the axis of the inner tank. The support assemblies all include a plurality of support members, the number of the support members is an even, and the plurality of support members of each support assembly are symmetrically provided with respect to the vertical centre axis plane of the inner tank, and each of the upper side and the lower side of the horizontal centre axis plane of the inner tank is provided with support members; each support member includes an inner end connected to the outer end of the inner tank and an outer end connected to the inner wall of the shell, and the support member is located in a different plane from the axis of the inner tank. That is, the support member is designed to be eccentric, such that the support member can pull the inner tank to avoid the rotation of the inner tank when the inner tank rotates along the circumferential direction, to ensure the normal use of cryogenic storage tanks.

## Description

### CROSS-REFERENCE TO RELATED APPLICATIONS

This application claims priority to Chinese Patent Application No. 202211277061.3, titled "Cryogenic Storage Tank", filed October 18, 2022, the entire disclosure of which is incorporated herein by reference.

### TECHNICAL FIELD

The present disclosure generally relates to the field of cryogenic pressure container, and more particularly, to a cryogenic storage tank.

### BACKGROUND

The medium temperature of the conventional cryogenic storage tank is generally not less than -196 °C, which is the liquefaction temperature of nitrogen, and ultra-low temperature medium temperature reaches below -253 °C. The liquid hydrogen or liquid helium medium has a low boiling point, low density, small latent heat of vaporization, and the cryogenic storage tank has more stringent insulation requirements.

A cryogenic storage tank usually includes a shell, an inner tank and a support structure. A vacuum space is provided between the shell and the inner tank. The support structure supports the inner tank in the shell. The support structure not only has to bear the weights of the inner tank itself and the contained liquid medium, but also has to resist the impact from external loads, and the heat transferred through the support structure cannot be too large, so as to ensure that the overall heat leakage of the cryogenic storage tank to meet the heat insulation requirements.

The current support structure usually includes a radial support member, but the radial support member does not constrain the rotation of the inner tank around the axis, that is, along the circumferential direction. When the inner tank rotates along the circumferential direction, it is easy to lead the pipeline between the inner tank and the shell to be damaged or failed, so that the cryogenic storage tank cannot be used normally.

### SUMMARY

The present disclosure provides a cryogenic storage tank, to solve a problem in the existing art that the inner tank rotates along the circumferential direction, resulting in that the cryogenic storage tank cannot be used normally.

In order to achieve the above objective, the present disclosure provides a cryogenic storage tank, including: a shell; an inner tank provided inside the shell; and two support assemblies supported between the inner tank and the shell; the two support assemblies are provided at two opposite ends of the inner tank along an axis of the inner tank respectively;
each support assembly includes a plurality of support members, and the number of the support members is even; the plurality of support members of each support assembly are provided symmetrically with respect to a vertical centre axis plane of the inner tank, and each of an upper side and a lower side of a horizontal centre axis plane of the inner tank is provided with the support members; and
each support member includes an inner end and an outer end, the outer end of the support member is connected to an inner wall of the shell, the inner end of the support member is connected to an outer wall of the inner tank, and the support member is located in a different plane from the axis of the inner tank.

In an embodiment, the inner end and the outer end of each support member are located on the same side of the horizontal centre axis plane of the inner tank.

In an embodiment, the inner end of each of the at least two of the plurality of support members, and an outer end of each of the at least two of a plurality of support members is provided correspondingly on another side of the horizontal centre axis plane of the inner tank.

In an embodiment, the inner ends of the plurality of support members are staggered with each other in a manner that the inner ends of the plurality of support members are located in different vertical planes.

In an embodiment, the inner ends of at least two of the plurality of support members are provided in the same vertical plane and are located in different vertical planes from the inner ends of remaining support members.

In an embodiment, a space in the cryogenic storage tank is divided into four quadrant regions bounded by the vertical centre axis plane and the horizontal centre axis plane, wherein the support member in any one of the four quadrant regions is not connected to the support members in other quadrant regions.

In an embodiment, when the same quadrant region is provided with the plurality of the support members, the plurality of the support members are not connected to each other.

In an embodiment, an angle between each support member and a radial direction of the horizontal centre axis plane of the inner tank is from 30° to 60° .

In an embodiment, an angle between each support member and an axial direction of the horizontal centre axis plane of the inner tank is from 60° to 90° .

In an embodiment, the plurality of the support members of each support assembly are provided symmetrically with respect to the horizontal centre axis plane of the inner tank.

In an embodiment, an eccentric distance of the support member located above the horizontal centre axis plane of the inner tank is the same or different from an eccentric distance of the support member located below the horizontal centre axis plane of the inner tank.

In an embodiment, the outer end of the support member is connected to a barrel or a closure head of the shell, and the inner end of the support member is connected to the closure head of the inner tank.

In an embodiment, the support member is in the form of a tube, rod or hanging ring; and when the support member is the form of the hanging ring, and the support member is made of a fiber reinforced resin composite material.

In an embodiment, each of the at least one support assembly further includes at least two radial support members distributed along a periphery of the inner tank; the number of the radial support members is an even, and each radial support member is extended in a radial direction of the inner tank, and an inner end of each radial support member is located on the axis of the inner tank, and an outer end of each radial support member is connected to the inner wall of the shell.

In an embodiment, the outer end of the support member is mounted to the shell by an outer mounting seat, and the outer mounting seat is fixed to the inner wall of the shell; and
the inner end of the support member is mounted to the inner tank by an inner mounting seat, and the inner mounting seat is fixed to the outer wall of the inner tank.

The advantages and positive effects of the present disclosure can be seen from the above technical solutions:
the cryogenic storage tank of the present disclosure includes an inner tank, a shell and support assemblies. The support assemblies all include a plurality of support members, the plurality of support members of each support assembly are symmetrically provided with respect to the vertical centre axis plane of the inner tank, and the upper side and the lower side of the horizontal centre axis plane of the inner tank are provided with support members; the support member is located in a different plane from the axis of the inner tank. That is, the support member is designed to be eccentric, such that the support member can pull the inner tank to avoid the rotation of the inner tank when the inner tank wants to rotate along the circumferential direction, to ensure the normal use of cryogenic storage tanks. The eccentric support member can avoid the rotation of the inner tank along the circumferential direction, no additional anti-deflection structure between the inner tank and the shell is needed, and thus spots of heat leakage are reduced, thus the loss of heat between the inner tank and the shell are reduced.

### BRIEF DESCRIPTION OF THE DRAWINGS

FIG. 1 is a view of a partial structure of the cryogenic storage tank according to an embodiment of the present disclosure.
FIG. 2 is a side view of the cryogenic storage tank after removing the outer head of the shell according to an embodiment of the present disclosure.
FIG. 3 is a front view of the cryogenic storage tank after removing the outer head of the shell according to an embodiment of the present disclosure.

The reference numbers: 1. cryogenic storage tank; 11. shell; 12. inner tank; 13. support member; 14. outer mounting seat; 15. inner mounting seat.

### DETAILED DESCRIPTION OF THE EMBODIMENTS

Exemplary embodiments embodying the features and advantages of the present disclosure will be described in detail in the following description. It should be understood that the present disclosure is capable of various variations in different embodiments, none of which is outside the scope of the present disclosure, and the descriptions and drawings therein are essentially for illustrative purposes and are not intended to limit the present disclosure.

In order to further illustrate the principle and structure of the present disclosure, the embodiments of the present disclosure are described in detail in connection with the accompanying drawings.

The present disclosure provides a cryogenic storage tank suitable for storing and transporting cryogenic liquids such as liquid nitrogen, liquid hydrogen and liquid helium.

The temperature of the liquid nitrogen is -196° C, the temperature of the liquid hydrogen is -253° C, and the temperature of the liquid helium is -267.8° C.

The cryogenic storage tank 1 in the present disclosure is a horizontal cryogenic storage tank, and during use, the cryogenic storage tank is lying down, i.e., the axis of the cryogenic storage tank extends along the horizontal direction.

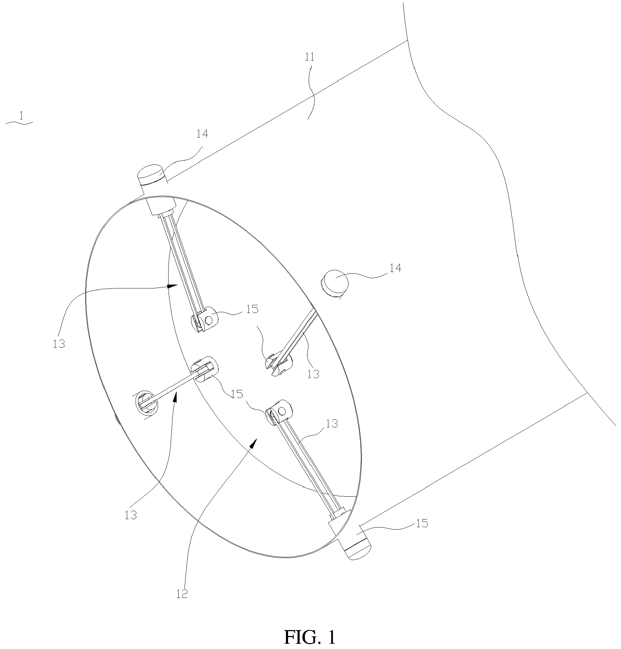

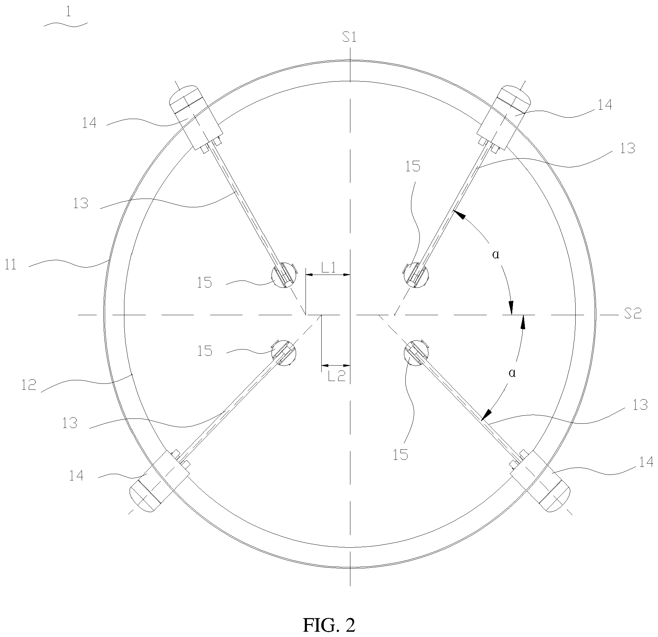

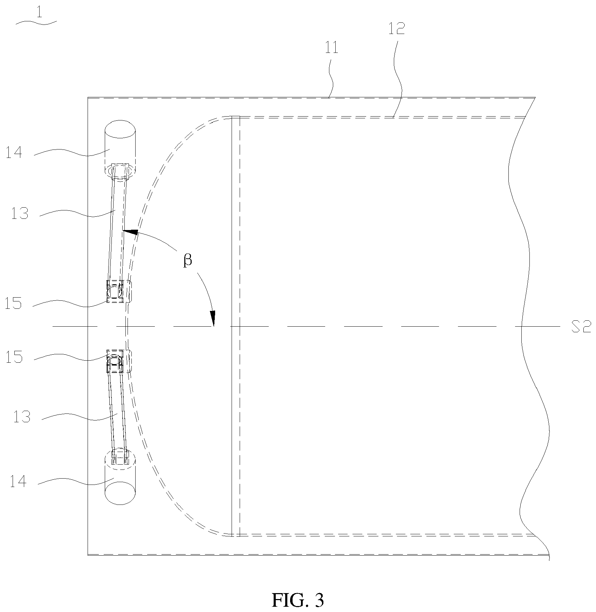

FIG. 1 is a view of a partial structure of a cryogenic storage tank, FIG. 2 is a side view of the partial structure of the cryogenic storage tank, and FIG. 3 is a front view of the partial structure of the cryogenic storage tank. In conjunction with FIGS. 1, 2, and 3, the cryogenic storage tank 1 includes a shell 11, an inner tank 12 provided inside the shell 11, and a support assembly supported between the inner tank 12 and the shell 11.

The inner tank 12 is configured to store a cryogenic liquid. In this embodiment, the inner tank 12 may be made of the material S31608.

Specifically, the inner tank 12 includes an inner cylinder and two inner closure heads provided at two ends of the inner cylinder, respectively.

The shell 11 is wrapped around an periphery of the inner tank 12, and there is a gap between an inner wall of the shell 11 and an outer wall of the inner tank 12. In this embodiment, the shell 11 is made of the material 16MnDR.

The shell 11 and the inner tank 12 are set concentrically, i.e., the axes of the shell 11 and the inner tank 12 are located on the same straight line.

Specifically, the shell 11 includes an outer cylinder and outer closure heads provided at two ends of the outer cylinder.

The support assembly is provided between the shell 11 and the inner tank 12 to support the inner tank 12 within the shell 11. Specifically, there are two support assemblies, and the two support assemblies are provided at two opposite ends of the inner tank 12 along the axis of the inner tank 12.

One of the two support assemblies is a fixed support assembly and the other is a movable support assembly. The fixed support assembly is fixed between the inner tank 12 and the shell 11, to prevent the inner tank 12 from moving forward and backward along the axis of the inner tank 12, and prevent the inner tank 12 from moving due to thermal expansion and contraction to avoid affecting attachments. The movable support assembly is capable of moving along with the inner tank 12 when the inner tank 12 slides along the axis with respect to the shell 11 due to thermal expansion and contraction.

Each support assembly includes a plurality of support members 13, and the number of support members 13 is an even. In this embodiment, the support assembly includes four support members 13, and in other embodiments, the support assembly may also include six support members 13, eight support members 13, and other numbers of support members 13.

The plurality of support members 13 of each support assembly are symmetrically provided with respect to the vertical centre axis plane S1 of the inner tank 12, and the support members 13 are provided on the upper side and the lower side of the horizontal centre axis plane S2 of the inner tank 12. Specifically, in this embodiment, the four support members 13 are symmetrically provided with respect to the vertical centre axis plane S1, i.e., there are two support members 13 provided on two sides of the vertical centre axis plane S1 respectively, and two support members 13 are provided on the upper side and the lower side of the horizontal centre axis plane S2 respectively. The vertical centre axis plane S1 of the inner tank 12 refers to a plane that extends vertically through the axis of the inner tank 12. The horizontal centre axis plane S2 is a plane extending horizontally through the axis of the inner tank 12. The axes of the shell 11 and the inner tank 12 are in the same straight line. Therefore, the vertical centre axis planes S1 of the shell 11 and the inner tank 12 are the same plane, and the horizontal centre axis planes S2 are also the same plane.

Taking the vertical centre axis plane S1 and the horizontal centre axis plane S2 as boundaries, and taking the end point of the end portion of the inner tank 12 as a center, a space within the cryogenic storage tank 1 is divided into four quadrant regions. In this embodiment, there are four support members 13, so that each quadrant region is provided with one support member 13, correspondingly. In other embodiments, the number of support members 13 in each quadrant region may be set according to the actual situation.

Specifically, each support member 13 includes an inner end and an outer end. The outer end is connected to an inner wall of the shell 11 and the inner end is connected to an outer wall of the inner tank 12. Specifically, the outer end is connected to the barrel or closure head of the shell 11. The inner end is connected to the closure head of the inner tank 12.

The outer ends of the plurality of support members 13 of each support assembly are spaced apart along a circumferential direction of the shell 11, and the outer ends of the plurality of support members 13 of each support assembly are symmetrically provided with respect to a vertical centre axis plane S1 of the shell 11. The inner ends of the plurality of support members 13 of each support assembly are spaced apart along the circumferential direction of the inner tank 12, and the inner ends of the plurality of support members 13 of each support assembly are symmetrically provided with respect to the vertical centre axis plane S1 of the inner tank 12, such that the plurality of support members 13 are symmetrically provided with respect to the vertical centre axis plane S1 of the inner tank 12.

The support members 13 are located in a different plane from the axis of the inner tank 12. Specifically, the support members 13 are different from the axis of the inner tank 12 in any of the planes.

In another way, a line from the apex of the inner tank to any other point on the outer wall of the inner tank is radial, and the extension direction of each support member deviates from the radial direction. The apex of the inner tank specifically refers to the apex of the closure head.

That is, the extension direction of the support member 13 is not the radial direction of the inner tank 12, i.e., there is an angle between the support member 13 and the radial direction of the inner tank 12. Therefore, the support member 13 in the present disclosure is designed to be eccentric.

The eccentric design of the support member 13 causes the inner end of the support member 13 to move when the inner tank 12 rotates along the circumferential direction, thus the support member 13 is stretched, and the stretching of the support member 13 provides a tensile force that pulls on the inner tank 12, such that the inner tank 12 cannot rotate along the circumferential direction, and the eccentric support member 13 allows the inner tank 12 to be compensated by the rotation of the support member 13 when the inner tank 12 are contracted, reducing the stress on the support member 13.

The eccentric support member 13 avoids the rotation of the inner tank 12 along the circumferential direction, such that no additional anti-deflection structure between the inner tank 12 and the shell 11 is needed. Therefore, with respect to the anti-deflection method in the related art, the spots of heat leakage in the cryogenic storage tank 1 in the present disclosure are reduced, thus the loss of heat between the inner tank 12 and the shell 11 is reduced, and the reliability of the cryogenic storage tank 1 is improved.

Specifically in this embodiment, the inner end and the outer end of each support member 13 are located on the same side of the horizontal centre axis plane S2 of the inner tank 12. That is, the inner end and the outer end of the support member 13 located above the horizontal centre axis plane S2 are both located above, and there is a spacing between the inner end of the support member 13 and the horizontal centre axis plane S2. The inner end and the outer end of the support member 13 located below the horizontal centre axis plane S2 are both located below, and there is a spacing between the inner end and the horizontal centre axis plane S2. At this point, the support member 13 in any one of the quadrant regions is not connected to any one of the support members 13 in the other quadrant regions, i.e. any two support members 13 are not connected to each other, and the inner ends of the plurality of support members 13 are located in the same vertical plane.

In other embodiments, the inner ends and the outer ends of at least two support members 13 are provided on two sides of the horizontal centre axis plane S2 of the inner tank 12 respectively. The inner end and the outer end of the support member 13 being provided on two sides means that the inner end of the support member 13 passes through the horizontal centre axis plane S2. Since the support members 13 are symmetrically provided about the vertical centre axis plane S 1, when the inner end and the outer end of any one of the support members 13 are provided on two sides of the horizontal centre axis plane S2, the inner end and the outer end of the support member 13, which are symmetrically provided with that support member 13, are also necessarily provided on two sides of the horizontal centre axis plane S2, i.e., there can be the inner ends and the outer ends of two support members 13 provided on two sides of the horizontal centre axis plane S2, or there may be four, six or other even number of support members 13 with inner and outer ends provided on two sides of the horizontal centre axis plane S2.

Exemplarily, the two support members 13 are provided symmetrically about the vertical centre axis plane S1 located above the horizontal centre axis plane S2, the inner end of each support member 13 passes through the horizontal centre axis plane S2 and is located below the horizontal centre axis plane S2. At this time, the support member 13 in any one of the quadrant regions is not connected to the support members 13 in the other quadrant regions, i.e. any two support members 13 are not connected to each other, and the inner ends of the plurality of support members 13 are located in the same vertical plane. The inner ends of the plurality of support members 13 may also be located in different vertical planes.

As another example, the inner ends of all the support members 13 are provided in the one side of the horizontal centre axis plane of the inner tank 12, corresponding outer ends of all the support members 13 are provided in the another side of the horizontal centre axis plane of the inner tank 12. That is, the inner end of each support member 14 passes through the horizontal centre axis plane S2.

When the inner ends of the support members 13 are provided on one side of the horizontal centre axis plane S2, and corresponding outer ends of the support members 13 are provided on another side of the horizontal centre axis plane S2, the inner ends of the plurality of support members 13 can be staggered with each other in a manner that the inner ends of the plurality of support members 13 are located in different vertical planes, and thus to make the plurality of support members 13 unconnected. The inner ends of at least two support members 13 can be located in the same vertical plane, and located in different vertical planes from the inner ends of the remaining support members 13 to realize a staggered setting, and thus to make the plurality of support members 13 unconnected. Exemplarily, the inner ends of the two support members 13 located above the horizontal centre axis plane S2 pass through the horizontal centre axis plane S2, and the two support members 13 are symmetrically provided on two sides of the vertical centre axis plane S1, the inner ends of the above two support members 13 are provided in the same vertical plane, and the inner ends of the two support members 13 are provided in different vertical planes from the inner ends of the remaining support members 13.

Due to the setting of the inner end of the support member 13 passing through the horizontal centre axis plane S2, the length of the support member 13 is increased, which in turn extends the heat conduction path, thereby better avoiding the transfer of cold on the inner tank 12 through the support member 13 to the shell 11.

In practice, whether or not the inner end of the support member 13 passes through the horizontal centre axis plane S2 is determined based on the actual condition.

When the inner end of the support member 13 is provided on one side of the horizontal centre axis plane S2, and the corresponding outer end of the support member 13 is provided on another side of the horizontal centre axis plane S2, the quadrant region in which the majority of the support member 13 is located is defined as the quadrant region in which the support member 13 is located. Exemplarily, where a majority of the support member 13 is located in one of the quadrant regions, such as the first quadrant region, even if the inner end of the support member 13 passes through the horizontal centre axis plane S2 and is located in another quadrant region, the support member 13 is defined to be located in the first quadrant region.

The angle α between each support member 13 and the radial direction of the horizontal centre axis plane S2 of the inner tank 12 is from 30° to 60° , as shown in FIG. 2. The angle α in the range of 30° to 60° can better ensure that the support member 13 is in the state of tension, which can be adjusted according to the size of the force load.

The angle β between each support member 13 and the axial direction of the horizontal centre axis plane S2 of the inner tank 12 is from 60° to 90° , as shown in FIG. 3. The angle is designed to provide an axial sliding distance to avoid excessive stress.

The angle is designed to make the cryogenic storage tank 1 particularly suitable to fill with an ultra-low temperature liquid medium, in this case, the inner tank 12 is contracted, and the support member 13 of the movable support assembly can be rotated and follow the movement of the inner tank 12. The angle is reasonably selected for specific applications to ensure that the support member 13 is always in a state of tension. The temperature of the conventional cryogenic medium is generally not lower than -196° C of liquid nitrogen, and the ultra-low-temperature medium refers to a medium with a temperature lower than -196 ° C. For example, liquid hydrogen and liquid helium, the temperature of liquid hydrogen is -253 ° C, and the temperature of liquid helium is -267.8 ° C. The temperature of liquid hydrogen is -253 ° C, and the temperature of liquid helium is -267.8 ° C.

The support member 13 is able to always pull on the inner tank 12 by always remaining in the state of tension, thereby avoiding circumferential rotation of the inner tank 12.

The eccentric distance of the support member 13 located above the horizontal centre axis plane S2 of the inner tank 12 is the same or different from the eccentric distance of the support member 13 located below the horizontal centre axis plane S2 of the inner tank 12. Taking the support member 13 located above the horizontal centre axis plane S2 as an example, the eccentric distance in the present disclosure is a distance between the intersection point of the support member 13 extending to the horizontal centre axis plane S2 and the axis. As shown in FIG. 2, the eccentric distance above the horizontal centre axis plane S2 is noted as L1, and the eccentric distance below the horizontal centre axis plane is noted as L2, and L1 and L2 may or may not be equal.

In this embodiment, there are four support members 13, i.e., two support members 13 are provided above the horizontal centre axis plane S2, and the two support members 13 are symmetrically provided, in which case the eccentric distance of each support member 13 is L1. Two support members 13 are provided below the horizontal centre axis plane S2, and the two support members 13 are symmetrically provided, in which case the eccentric distance of each support member 13 is L2.

The plurality of support members 13 of the support assembly are symmetrically provided about the horizontal centre axis plane S2 when L1 and L2 are equal.

In other embodiments, when there are four support members 13 above the horizontal centre axis plane S2, the eccentric distance of the two support members 13 symmetrically provided is the same. In this case, there maybe two or four support members 13 below the horizontal centre axis plane S2, and when there are two support members 13, the eccentric distance is not the same as any of the eccentric distances above the horizontal centre axis plane S2, or it may be the same as one of the eccentric distances above the horizontal centre axis plane S2.

When there are four support members 13 below the horizontal centre axis plane S2, the eccentric distance below the horizontal centre axis plane S2 can be completely different from the eccentric distance above the horizontal centre axis plane S2, i.e. the entire support assembly has four values of eccentric distances, or one of the eccentric distances can be equal to one of the eccentric distances above the horizontal centre axis plane S2, i.e. the entire support assembly has three values of eccentric distances, or the plurality of support members of the support assembly 13 are also symmetrically provided about the horizontal centre axis plane S2, i.e. the entire support assembly has just two values of eccentric distances.

Specifically, the support members 13 are in the form of tubes, rods or hanging rings. When the support member 13 is in the form of the hanging ring, the support member 13 is made of a fiber-reinforced resin composite material.

The outer end of the support member 13 is mounted to the shell 11 by the outer mounting seat 14, which is fixed to the inner wall of the shell 11. The inner end of the support member 13 is mounted to the inner tank 12 by the inner mounting seat 15, which is fixed to the outer wall of the inner tank 12.

The inner end of the support member 13 is mounted by different specifications of the inner mounting seats 15 when the inner end of the support member 13 is located in different vertical planes.

Further, the at least one support assembly further includes at least two radial support members distributed along a circumferential direction of the inner tank 12. The number of radial support members is an even, each radial support member extends along the radial direction of the inner tank 12, and an inner end of each radial support member is located on the axis of the inner tank 12, and an outer end of each radial support member is connected to the inner wall of the shell 11. In this embodiment, the plurality of radial support members are evenly distributed along the circumferential direction of the inner tank 12.

That is, the fixed support assembly or movable support assembly also includes a radial support member, or both include a radial support member.

The number of radial support members of the fixed support assembly and the number of radial support members of the movable support assembly may or may not be the same.

As can be seen from the above technical solution, the advantages and positive effects of the present disclosure are:
the cryogenic storage tank of the present disclosure includes an inner tank, a shell and support assemblies. Each the support assembly includes a plurality of support members, the plurality of support members of each support assembly are symmetrically provided with respect to the vertical centre axis plane of the inner tank, and the upper side and the lower side of the horizontal centre axis plane of the inner tank are provided with support members; the support member is located in a different plane from the axis of the inner tank. That is, the support member is designed to be eccentric, such that the support member can pull on the inner tank to avoid the rotation of the inner tank when the inner tank rotates along the circumferential direction, to ensure the normal use of cryogenic storage tanks, and the eccentric support member can avoid the rotation of the inner tank along the circumferential direction, such that no additional anti-deflection structure between the inner tank and the shell is needed, and thus spots of heat leakage are reduced, thus the loss of heat between the inner tank and the shell are reduced.

While the present disclosure is described with reference to several exemplary embodiments, it should be understood that the terms used are illustrative and exemplary, not limiting. Since the present disclosure is capable of being practiced in a variety of forms without departing from the spirit or substance of the present disclosure, it should be understood that the foregoing embodiments are not limited to any of the foregoing details, but are to be construed broadly within the scope of the limitations set forth in the accompanying claims, and that therefore all variations and adaptations falling within the scope of the claims, or the equivalent thereof, should be covered by the accompanying claims.

## Claims

1. A cryogenic storage tank, **characterized by** comprising:
a shell;
an inner tank provided inside the shell; and
two support assemblies supported between the inner tank and the shell;
wherein the two support assemblies are provided at two opposite ends of the inner tank along an axis of the inner tank respectively;
wherein each support assembly comprises a plurality of support members, and the number of the support members is even ;
wherein the plurality of support members of each support assembly are provided symmetrically with respect to a vertical centre axis plane of the inner tank, and each of an upper side and a lower side of a horizontal centre axis plane of the inner tank is provided with the support members; and
wherein each support member comprises an inner end and an outer end, the outer end of the support member is connected to an inner wall of the shell, the inner end of the support member is connected to an outer wall of the inner tank, and the support member is located in a different plane from the axis of the inner tank.

2. The cryogenic storage tank according to claim 1, **characterized in that** the inner end and the outer end of each support member are located on the same side of the horizontal centre axis plane of the inner tank.

3. The cryogenic storage tank according to claim 1, **characterized in that** the inner end of each of the at least two of the plurality of support members, and an outer end of each of the at least two of a plurality of support members is provided correspondingly on another side of the horizontal centre axis plane of the inner tank.

4. The cryogenic storage tank according to claim 3, **characterized in that** the inner ends of the plurality of support members are staggered with each other in a manner that the inner ends of the plurality of support members are located in different vertical planes.

5. The cryogenic storage tank according to claim 3, **characterized in that** the inner ends of at least two of the plurality of support members are provided in the same vertical plane and are located in different vertical planes from the inner ends of remaining support members.

6. The cryogenic storage tank according to any one of claims 1 to 5, **characterized in that** a space in the cryogenic storage tank is divided into four quadrant regions bounded by the vertical centre axis plane and the horizontal centre axis plane, wherein the support member in any one of the four quadrant regions is not connected to the support members in other quadrant regions.

7. The cryogenic storage tank according to claim 6, **characterized in that** when the same quadrant region is provided with the plurality of the support members, the plurality of the support members are not connected to each other.

8. The cryogenic storage tank according to any one of claims 1 to 7, **characterized in that** an angle between each support member and a radial direction of the horizontal centre axis plane of the inner tank is from 30° to 60° .

9. The cryogenic storage tank according to any one of claims 1 to 8, **characterized in that** an angle between each support member and an axial direction of the horizontal centre axis plane of the inner tank is from 60° to 90° .

10. The cryogenic storage tank according to any one of claims 1 to 9, **characterized in that** the plurality of the support members of each support assembly are provided symmetrically with respect to the horizontal centre axis plane of the inner tank.

11. The cryogenic storage tank according to any one of claims 1 to 10, **characterized in that** an eccentric distance of the support member located above the horizontal centre axis plane of the inner tank is the same or different from an eccentric distance of the support member located below the horizontal centre axis plane of the inner tank.

12. The cryogenic storage tank according to any one of claims 1 to 11, **characterized in that** the outer end of the support member is connected to a barrel or a closure head of the shell, and the inner end of the support member is connected to the closure head of the inner tank.

13. The cryogenic storage tank according to any one of claims 1 to 12, **characterized in that** the support member is in the form of a tube, rod or hanging ring; and
wherein when the support member is the form of the hanging ring, and the support member is made of a fiber reinforced resin composite material.

14. The cryogenic storage tank according to any one of claims 1 to 13, **characterized in that** each of at least one support assembly further comprises at least two radial support members distributed along a periphery of the inner tank, wherein the number of the radial support members is an even, each radial support member is extended in a radial direction of the inner tank, an inner end of each radial support member is located on the axis of the inner tank, and an outer end of each radial support member is connected to the inner wall of the shell.

15. The cryogenic storage tank according to any one of claims 1 to 14, **characterized in that** the outer end of the support member is mounted to the shell by an outer mounting seat, wherein the outer mounting seat is fixed to the inner wall of the shell; and
wherein the inner end of the support member is mounted to the inner tank by an inner mounting seat, and the inner mounting seat is fixed to the outer wall of the inner tank.
